# EUROPEAN PATENT APPLICATION

(11) **EP 0 865 910 A1**
(43) Date of publication of application: **23.09.1998**
(21) Application number: 98104778.0
(22) Date of filing: 17.03.1998
(51) Int. Cl.: B32B 27/32, C08K 5/00, C08J 5/18, B32B 27/18

(54) **Polymeric films**

(30) Priority: 18.03.1997 GB 9705547
(71) Applicant: Hoechst Trespaphan GmbH, 66539 Neunkirchen (DE)
(72) Inventor: Davidson, Paul Malcolm Mackenzie, Elcombe, Swindon SN4 0NW (GB); Biddiscombe, Helen Ann, North Petherton, Bridgwater TA6 6SN (GB); Govier, Rebecca Karen, Abbey Meads, Swindon SN2 3YB (GB); Ott, Marc Fritz Manfred, Wootton Bassett, Swindon SN4 8LJ (GB)
(74) Representative: Luderschmidt, Schüler & Partner GbR

(57) **Abstract**

Biaxially oriented polyolefin films having a thickness of not more than 50µm having a layer of a polypropylene-based resin with microvoids therein, the microvoids having been formed by stretching a web containing the beta-form of polypropylene at an area stretch ratio of at least 15:1. These films have shown particularly uniform opacity when compared with films of a similar thickness which have been voided using chalk as the voiding agent.

## Description

This invention concerns biaxially oriented polyolefin films which contain microvoids, and in particular voided polypropylene films, and methods of manufacture and use thereof.

Polypropylene films including microvoids induced by the biaxial stretching of films containing particulate fillers have found wide acceptance for many end uses such as packaging and labelling. Such films have an inherent opacity as a result of the presence of the microvoids, and this is usually combined with an enhanced film yield since the voids result in a film with a considerably lower density than that of the polymer and filler from which the film is made.

Despite these desirable properties, such films do have disadvantages. In particular, the opacity and other optical properties of such films can be less than is desired for particular end uses, their opacity is often uneven over the film surface, these undesirable properties tending to be greater with thin films, for example, of less than about 30µm, and thin voided films can be difficult to produce as a consequence of the presence of the particles used to effect the voiding.

Accordingly, it is an object of the present invention to provide opaque films, particularly opaque polypropylene films having a thickness of less than about 50 micrometers, that have desirable characteristics.

It is also an object of the invention to provide methods of making and using such films.

In accordance with these and other objectives, there is provided in accordance with the present invention, a biaxially oriented polyolefin film having a thickness of not more than 50µm, comprising a layer of a polypropylen-based resin having microvoids therein, the microvoids having been formed by stretching a web containing the beta-form of polypropylene at an area stretch ratio of at least 15:1.

There is also provided in accordance will, the present invention, a biaxially oriented polyolefin film having a thickness of not more than 50µm, comprising an opaque layer of a polypropylene-based resin, the opaque layer comprising no void-initiating particles or opacifying pigments.

There is also provided in accordance with the present invention, a method of forming a film as discussed above including (a) forming a film comprising a layer of the beta-form of polypropylene, and (b) stretching the film at an area stretch ratio of at least 15:1 to provide voids in the film.

Further objects, features, and advantages of the present invention will become apparent from the detailed description of preferred embodiments that follows.

According to the present invention there is provided a biaxially oriented polyolefin film having a thickness of not more than 50µm comprising a layer of polypropylene-based resin having microvoids therein the microvoids having been formed by stretching a web containing the beta-form of polypropylene at an area stretch ratio of at least 15:1.

"Polypropylene-based resin" or "polypropylene-based polymer" and "Polypropylene" are used synonymously. These terms shall mean polymers containing at least 50 % by weight, based on the weight of the polylmer, of propylene units.

"Web" shall mean a sheet like extrudate resulting from extruding the respective polymer melt or melts through a slot die and subsequent cooling of the melt to form the unoriented film.

"Base layer" shall mean either "the layer" in case of a monolayered film or the thickest layer, generally being the innermost, central layer of the multilayer structure.

"Beta form of polypropylene" shall mean that crystalline modification of polypropylene which has a lower melting point and a lower density than the common alpha form of propylene.

"Microvoids" shall mean the hollow vacuoles in the polymer matrix reducing the density of the oriented polypropylene film wherein the reduced density is lower than that of a corresponding film without any voids.

Films in accordance with the present invention live shown particularly uniform opacity over their surfaces when compared with voided films of similar thickness in which voiding has been produced using an inorganic particulate such as chalk. Furthermore, they can be produced with combinations of thicknesses and densities which either cannot be produced using chalk as a voiding agent or can only be produced with difficulty. For example, according to the invention 40µm thick films with densities of 0.55 g/cm³ and unit weight of 22 g/m², and 25µm thick films with densities of 0.70 g/cm³ and unit weight of 17.5 g/m², can be produced.

The beta-form of polypropylene is relatively unstable compared with the corresponding alpha-form under the conditions usually used to produce polypropylene films. Thus when melts of polypropylene are extruded and then cooled to form a polymeric film, which may then subsequently be stretched, the alpha-form of polypropylene tends to predominate. However, it is known to produce films using polypropylene containing high concentrations of the beta-form of polypropylene by mixing polypropylene containing a high proportion of the alpha-form with a suitable nucleating agent which induces the formation of high concentrations of the beta-form when it is molten and subsequently cooled.

One example of such a process is described in U.S. Patent 4,386,129, which is hereby incorporated by reference in its entirety, in which a variety of so-called beta-nucleators are dispersed in polypropylene following which films are produced therefrom by melting and subsequent cooling, the crystallinity of the resulting cast films being controlled by appropriate adjustment of the cooling conditions. Selective extraction of the beta-form of the polypropylene from the films leaving a matrix of the alpha-form is then used to impart porosity to the films.

U.S. Patent 5,231,126, which is hereby incorporated by reference in its entirety, describes the use of two component mixtures of beta-nucleating agents to produce microporous films by mono- or biaxial stretching east polypropylene webs containing a high concentration of the beta-form of polypropylene resulting from the use of the mixture of nucleating agents. It is believed that the porosity results from voids induced by the change of the beta-form into the alpha-form during the stretching process, the alpha-form having a higher density than the beta-form from which it is derived. The development of porosity during the stretching process is accompanied by a significant reduction in apparent film density and the films become opaque with a high degree of whiteness.

More recently it has been proposed in EP O632095 which is incorporated by reference in its entirety, to use a variety of organic amides as beta-nucleating agents in the formation of mono- and biaxially stretched polypropylene films. Here, a melt of a mixture of polypropylene and die nucleating agent is cast into a film web which is allowed to crystallize at a temperature of 15 to 140°C to form a solid web containing die beta-form of polypropylene, following which the web is mono- or biaxially stretched at a temperature above 20°C but less than the melting point of die beta-form crystals in the web. The resulting stretched films are said to have high whiteness and hiding power combined with printability and writeability.

Microvoid formation during the plastic deformation of the beta-form of polypropylene is also described in the journal POLYMER (Vol. 35, No. 16, pp. 3442-5, 1995; and Vol.36, No. 13, pp. 2523-30, 1995), which is hereby incorporated by reference. Porosity is said to increase with higher crystallization and lower stretching temperatures, all samples containing the beta-form apparently becoming opaque when stretched at temperatures below 120-130°C.

In the present invention, the polypropylene-based resin or polypropylene based polymer can be any resin or polymer containing propylene units, generally at least 50% by weight of propylene units, preferably 80-100% by weight of propylene, for example 95-100% by weight of propylene, in each case based on the total polymer weight. The polypropylene-based polymer is preferably a propylene homopolymer or a random or block copolymer or terpolymer containing a major proportion (80-100wt%) of units derived from propylene, the remainder being ethylene or butylene and having a crystallinity of at least 40%, preferably 50 to 90%. Usually the polypropylene based polymer has a melting point of 140-170° C, preferably 155-165°C and a melt flow index (DIN 53 735 at 21,6 N and 230°C) of 1.0 - 10 g/10min, preferably 1.5-6.5 g/10min. Most preferred is isotactic propylene homopolymer containing about 100% propylene units and a melting point of 160-162°C.

The nucleating agent used to induce the formation of the beta-form of the polypropylene of the base layer can be selected from those proposed hitherto for the purpose. Any desired nucleating agent or agents can be used. However, particularly good results have been achieved using amides as proposed in EP O632095, and more particularly N.N'-dicyclohexyl-2,6-napthalene dicarboxamide.

The amount of nucleating agent used to induce the formation of the beta-form of polypropylene can be varied to give the desired amount of beta-form. For example, from 0.0001 to 5 wt%, preferably from 0,001 to 2 % wt% of the nucleating agent based on the weight of polypropylene, as described in EPO 632095 can be used, preferred amounts being from 0.001 to 1 wt%.

Films in accordance with the present invention can consist of a single layer of a polypropylene-based resin containing microvoids but they will often include one or more bier layers, for example, to impart particular properties to them such as gloss, printability, and/or heat sealability. The films can, for example, include an outer layer which confers such properties, and this layer can be in direct contact with the voided polypropylene layer, or on an intermediate layer between the voided layer and the outer layer.

Further layers can be formed of any material, and are preferably formed from polyolefins. Examples of polymers which can be used in the further layers include polymers containing units derived from one or more of ethylene, propylene, butene-1, and higher aliphatic alpha-olefins, and blends of such polymer. Other heat sealable polymers can be used to form heat sealable layers, for example, acrylic polymers, and polyolefins extended with unsaturated carboxylic acids and derivatives thereof, *e.g.*, acid ionomers and anhydrides.

Although only one surface of the voided polypropylene layer may have a further layer thereon, the other surface of the base layer can also have any further layers thereon. For example, a heat sealable layer which can be the same as or different from the optional layer on the other surface of the films can be used. Preferred materials for this layer can be selected from heat sealable polymers referred to above.

Films in accordance with the present invention can include one or more additives used in the polyolefin art, for example, slip agents, antistatic agents, antiblock agents, stabilizers, UV absorbers, and/or pigments. If present ,such additives preferably are present in amounts which do not significantly adversely affect the ability of polypropylene to crystallize in its beta-form. When additives are present, they can be in one or more of the layers of which the film is constructed.

Unlike prior art film, no external void-initiating particles or opacifying pigments are needed to make the present film opaque. In accordance with the invention, no external additives, such as calcium carbonate or other void- initiating particles like polyethlylene terephtalate (PET) or titanium dioxide or other white pigments are needed to give an opaque film. External additives are additives other than polypropylene and being incompatible with polypropylene and causing formation of voids upon stretching.

Films in accordance with the present invention have thicknesses of less than 50µm and they can be thinner, for example, less than 48µm, less than 40µm, or indeed considerably thinner still, for example, 35µm or less, *e.g.,* less than about 30µm or 25µm or less.

Films in accordance with the present invention can be produced using known methods, for example, by extrusion or coextrusion through a slot die of melts of the appropriate polymers for the layer or layers which may be desired, to form a polymer web which is cooled and thereafter sequentially biaxially stretched at an area stretch ratio of at least 15:1. However, when further layers are present on the voided polypropylene-based resin layer they can be applied to the voided layer by coating after the voided layer has been formed.

It is generally desirable to carry out certain of the processing steps, particularly the initial crystallization of the polypropylene from a melt containing the beta-form nucleating agent, under conditions which will bring about the formation of the desired film structure. More particularly, cooling of the polypropylene-based resin should be effected under conditions such that the beta-form thereof is produced and void formation can occur during subsequent stretching of the films.

The cooling or crystallization temperature used to induce the formation of the beta-form of polypropylene in the base layer of films of he present invention prior to their being stretched should generally be at least 20°C but less than the melting point of the beta-form of polypropylene. Although temperatures at the lower end of this range, for example up to 50°C, can be used, it is generally preferred to use temperatures of at least 70°C, and higher temperatures still are often preferred for example 90°C or more. However, the cooling temperature is preferably not more than 140°C, and from practical considerations it is preferably below the temperature at which the film sticks to surfaces used to cool it.

Cooling of the melt can be effected in air of a suitable temperature, but it is generally preferred to effect cooling by contacting the extruded web with a cooling surface, for example, a chill roll.

Subsequent biaxial stretching of the cooled web is generally, but not necessarily, effected sequentially, for example, under conditions known in the polypropylene film art. Sequential stretching enables the conditions used in the two directions to be selected independently of each other. Stretching in the direction of extrusion (the machine direction) will usually be effected in before stretching in the transverse direction.

The area stretch ratio of films of the present invention should be at least 15:1, and it will often be considerably more, for example at least 20:1. Higher area stretch ratios can, if desired be used, for example up to 65:1, a preferred range of area stretch ratios being from 30:1 to 50:2. Excessively large stretch ratios can give rise to difficulties in film production, and die area stretch ratio will usually be not more than about 70:1. Area stretch ratios are in general in the range of from 25:1 to 50:1. The area stretch ratio is the overall stretching applied to the film. In case of a first stretching lengthwise and a subsequent stretching crosswise the area stretch ratio results from multiplying the stretch ratio lengthwise and crosswise f.ex. stretching lengthwise 6:1 and crosswise 8:1 gives an area stretch ratio of 48:1.

The conditions used to effect stretching in die machine direction have been found to have a substantial effect on microvoid formation, lower stretch temperatures and lower stretch ratios usually leading to increased voiding. A preferred temperature range for stretching in die machine direction is from 70 to 110°C, and more preferably from 80 to 95°C, and the stretch ratio used in the machine direction will usually be at least 3:1, preferred range being from 3.5:1 to 8:1.

Subsequent stretching of the films in the transverse direction will in general be effected at lower temperatures than are conventionally used for die tranverse stretching of polypropylene films, for example, at from 100 to 160°C. However, it is generally preferred to effect stretching in the tranverse direction at temperatures of not more than 155°C and preferably not more than 150°C in order to produce biaxially stretched films having low densities. The stretch ratio used in the tranverse direction is preferably from 3:1 to 10:1.

Either or both outer surfaces of films in accordance with the present invention are preferably treated to increase their surface energy, for example, using flame or corona discharge treatment, in manners known in the art.

The following Examples are given by way of illustration only; and do not limit the scope of the invention.

### Examples 1 to 4

Four polymer webs were produced by coextruding through a slot die a base layer of propylene homopolymer containing 0.1 wt% of a beta-form nucleating agent N,N'-diclohexyl-2,6-naphthalene dicarboxamide; NJ-Star NU-100, ex New Japan Chemical Co., Ltd.), one (Example 3) also included a second layer of a propylene/ethylene copolymer (4 wt% ethylene).

In each case, the homopolymer layer was cooled by bringing it into contact with a chill roll having a surface temperature of 100°C, and the copolymer layer when present was cooled in the ambient air.

DSC measurements indicated that the homopolymer layer of each web contained a high level of the beta-form of polypropylene with Tₘ of 153°C.

Each of the cooled webs was then stretched in the direction of extrusion at the stretch ratio shown in Table 1 by contacting them with heated rolls at 90°C having different peripheral speeds to produce in each case an opaque mono-axially stretched web, DSC showing that virtually all of the beta-polypropylene had in each case been converted into the alpha-form.

The mono-axially stretched webs were then stretched in the transverse direction at the stretch ratios shown in Table 1 using a stenter oven at the temperature also shown in Table 1 to produce a bixaially stretched films with the densities shown in Table 1. The optical densities of the films are also shown in Table 1. The film of Example 3 had an outer layer of the copolymer which was 1 µm thick.

### Example 5 (Comparison)

A three-layer voided polyolefin film was produced by coextruding three-layer web through a slot die, the core layer consisting of the polypropylene homopolymer used in Examples 1 to 4, but containing 5 wt% of particulate chalk (mean particle size 3µm) and the two outer layers consisting of the copolymer used to form a second layer of the film of Example 3.

The extruded web was cooled on a chill roller at 20°C before being stretched in the machine direction over heated rolls with different peripheral speeds at a temperature of 100°C at a stretch ratio of 5:1 and then in a stenter oven at 160°C at a stretch ratio of 8:1. The film produced had a total thickness of 25µm with a voided core layer and two outer layers each 1µm thick.

**Table 1**

| Ex. | MD Stretch Ratio (x:1) | TD Stretch Ratio (y:1) | Temp (°C) | Film Thickness (µm) | Density (g/cm³) | Optical Density | Unit Weight (g/m²) |
|---|---|---|---|---|---|---|---|
| 1 | 4.5 | 8 | 140 | 30.0 | 0.68 | 0.55 | 20.4 |
| 2 | 5 | 7 | 135 | 32.0 | 0.62 | 0.65 | 19.8 |
| 3 | 4.5 | 8 | 144 | 25.0 | 0.60 | 0.43 | 15.0 |
| 4 | 4.5 | 8 | 144 | 26.0 | 0.65 | 0.44 | 16.9 |
| 5* | 45 | 8 | 160 | 25.00 | 0.69 | 0.30 | 17.3 |

| | | | | | | | |
|---|---|---|---|---|---|---|---|
| *Comparison | | | | | | | |

All of these films except that of Example 5 had a substantially even opacity over their entire surfaces whereas the film of Example 5 was patchy.

Although only a few exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention.

Great Britain Application 9705547.9, filed March 18, 1997, the priority document of the present application is hereby incorporated by reference in its entirety.

## Claims

1. A biaxially oriented polyolefin film having a thickness of not more than 50µm, comprising a layer of a polypropylene-based resin having rnicrovoids therein, the microvoids having been formed by stretching a web containing the beta-form of polypropylene at an area stretch ratio of at least 15:1.

2. A film according to claim 1, wherein the area stretch ratio is at least 20:1.

3. A film according to claim 1, wherein the area stretch ratio is from 25:1 to 50:1.

4. A film according to claim 1, in the form of a monoweb.

5. A film according to claim 1, having at least one further polymeric layer on the layer containing microvoids.

6. A film according to claim 5, having at least one intermediate layer between the layer containing microvoids and the at least one further polymeric layer.

7. A film according to claim 1, which includes one or more of a slip agent, an antistatic agent, an antiblock agent, a stabilizer, a UV absorber, or a pigment.

8. A film according to claim 1, comprising no void-initiating particles.

9. A film according to claim 1, comprising no opacifying pigments.

10. A biaxially oriented polyolefin film having a thickness of not more than 50µm, comprising an opaque layer of a polypropylene-based resins, the opaque layer comprising no void-initiating particles or opacifying pigments.

11. A method of forming a film as claimed in claim 1 comprising
(a) forming a film comprising a layer of the beta-form of polypropylene, and
(b) stretching the film at an area stretch ratio of at least 15:1 to produce voids in the film.

12. A film according to claim 1, having a thickness of less than 40µm.

13. A film according to claim 1, having a thickness of less than 25µm.
